# FASCICULE DE BREVET EUROPEEN

(11) **EP 0 526 361 B1**
(45) Date de publication et mention de la délivrance du brevet: **02.11.1995**
(21) Numéro de dépôt: 92420257.5
(22) Date de dépôt: 30.07.1992
(51) Int. Cl.: B23H 7/08

(54) **Electrode en alliage de cuivre à hautes performances pour usinage par électro érosion et procédé de fabrication**
Hochleistungsdrahtelektrode für Funkerosionsbearbeitung und Verfahren zur Herstellung derselben
High performance electrode wire for electric discharge machining and process for preparing same

(30) Priorité: 02.08.1991 FR 9110103
(43) Date de publication de la demande: 03.02.1993
(73) Titulaire: TREFIMETAUX, 92400 Courbevoie (FR)
(72) Inventeur: Negrerie, Marcel, F-95250 Cormeilles-en-Parisis (FR); Leterrible, Pascal, F-27140 Gisors (FR); Voirin, Anne, F-27200 Vernon (FR)
(74) Mandataire: Mougeot, Jean-Claude

(56) Documents cités:
- EP-A- 0 185 492
- EP-A- 0 312 674
- US-A- 4 977 303
- PATENT ABSTRACTS OF JAPAN vol. 10, no. 286 (M-521)27 Septembre 1986 & JP-A-61 103 731 (SUMITOMO ELECTRIC IND. LTD) 22 Mai 1986
- PATENT ABSTRACTS OF JAPAN vol. 10, no. 333 (M-534)12 Novembre 1986 & JP-A-61 136 733 (FUJIKURA LTD) 24 Juin 1986

## Description

L'invention concerne des électrodes sous forme de fil, en alliage de cuivre, utilisées sur des machines à usiner des pièces métalliques, essentiellement à découper, par électroérosion, technique appelée aussi étincelage érosif, ainsi qu'un procédé de fabrication de ces électrodes.

### RAPPEL DE L'ART ANTERIEUR

On connaît déjà de nombreux documents qui révèlent des procédés de fabrication d'électrodes métalliques sous forme de fil destinées à l'usinage par électroérosion.
On rappelle que, dans ce procédé, l'enlèvement de matière métallique est dû à la formation d'étincelles entre d'une part le fil, constituant une électrode, et d'autre part la pièce à usiner qui constitue l'autre électrode.
Dans ce qui suit, on appelle "électrode" le fil métallique servant à usiner par électroérosion une pièce électriquement conductrice, le plus souvent une pièce métallique, mais aussi céramique.

Parmi les qualités essentielles que doivent posséder les électrodes, on peut citer :
- une conductivité électrique élevée de manière à avoir un courant d'usinage élevé,
- une résistance mécanique élevée, qui détermine la traction qu'il est possible d'exercer sur l'électrode, de manière à pouvoir la guider avec précision lors de l'usinage,
- une usure aussi faible que possible,
- une bonne aptitude à dissiper la chaleur,
- une bonne stabilité des décharges électriques.

Parmi les électrodes déjà connues, un certain nombre comprend une âme centrale revêtue d'une couche externe. Schématiquement, les fonctions de ces deux parties constitutives sont les suivantes : pour l'essentiel, il revient à l'âme centrale d'assurer les deux premières qualités citées précédemment (à savoir une conductivité électrique élevée et une résistance mécanique élevée), alors qu'il revient à la couche externe d'assurer une usure aussi faible que possible de l'électrode et une bonne dissipation de la chaleur en cours de fonctionnement, ce qui peut être obtenu en utilisant des éléments vaporisables dans les conditions d'utilisation.

Ainsi, le brevet français n° 2 418 699-B1 décrit une électrode constituée d'une âme métallique pouvant être en cuivre, en laiton ou en acier, revêtue d'une couche métallique comprenant au moins 50 % d'un métal présentant une basse température d'évaporation, choisi parmi le zinc, le cadmium. Dans le procédé correspondant, l'électrode est obtenue par dépôt électrolytique, sur une âme métallique, des éléments métalliques constituant la couche externe, dépôt suivi d'un calibrage dans une filière.

La demande européenne n° 334 971-A1 décrit un procédé de fabrication d'une électrode consistant à traiter un fil, constitué d'une âme en cuivre ou alliage de cuivre et d'une couche externe en zinc, selon les étapes suivantes :
- diminution de la section du fil,
- traitement thermique de diffusion en atmosphère oxydante, de préférence entre 454 et 902°C,
- diminution de la section du fil,
- traitement thermique de recristallisation en atmosphère réductrice, de 600 à 850°C,
- diminution de la section du fil pour obtenir le diamètre final.

La demande européenne EP-A2-185 492 décrit un fil pour électroérosion comprenant une âme en acier plaqué cuivre recouvert d'une couche d'alliage Cu-Zn. Cette couche est obtenue par dépôt de Zn sur l'âme suivi d'un traitement thermique pour disperser le cuivre dans la couche de Zn, typiquement à 380°C pendant une heure.

Enfin, la demande européenne n° 381 595-A1 décrit un procédé de fabrication d'une électrode qui comporte l'enrobage d'une âme en cuivre ou alliage de cuivre par dépôt à froid d'au moins une couche de métal comprenant du zinc, à l'exclusion de toute opération ultérieure d'échauffement susceptible de produire une diffusion des métaux entre l'enrobage et l'âme.

### POSITION DU PROBLEME

La demanderesse a observé que les procédés et produits de l'art antérieur ne permettaient pas d'avoir simultanément un coût de production relativement faible et de hautes performances d'usage pour les électrodes.

Elle a recherché en particulier un procédé économique permettant d'obtenir plus spécifiquement une grande stabilité des décharges électriques lors de l'étincelage électroérosif. En effet, la stabilité des décharges électriques est un facteur important pour l'économie du procédé d'électroérosion et la qualité de l'usinage réalisé : une grande stabilité des décharges électriques augmente d'une part la durée de vie de l'électrode, et d'autre part la qualité de surface de la pièce usinée.

### OBJET DE L'INVENTION

L'invention a pour objet une électrode, sous forme de fil, destinée à l'usinage par électroérosion et permettant d'obtenir une grande stabilité des décharges électriques lors de l'usinage.
Un autre objet de l'invention est un procédé pour fabriquer, de manière économique, une telle électrode.

### DESCRIPTION DE L'INVENTION

Le procédé de fabrication d'une électrode pour électroérosion comprend, selon l'invention, la formation d'une couche métallique externe de zinc sur un fil métallique comprenant du cuivre, un traitement thermique suivi d'une diminution de la section du fil métallique et est caractérisé en ce que, de manière à obtenir économiquement une électrode adaptée à l'usinage par électroérosion et permettant d'obtenir plus particulièrement une grande stabilité des décharges électriques lors de l'usinage,
a) on forme une couche (30) de Zn sur un fil métallique (20) comprenant du cuivre, de diamètre supérieur au diamètre de l'électrode (1) à obtenir, de manière à former un fil (10),
b) après tréfilage éventuel du fil (10), on soumet le fil (10) à un traitement thermique de diffusion en atmosphère oxydante à une température inférieure à la température de transition beta prime (β′)- beta (β) de l'alliage binaire Cu-Zn et pendant la durée nécessaire à la transformation de la couche (30) riche en zinc en une couche (31) de Cu-Zn en phase beta prime (β′), de manière à former un fil (11) constitué d'une âme (21) et d'une couche (31),
c) on procède ensuite à un décapage sélectif du fil (11), de manière à éliminer les particules d'oxydes présentes à la surface de la couche (31) et,
d) on procède enfin au tréfilage du fil (11) ainsi décapé jusqu'au diamètre final, avec un rapport de tréfilage supérieur à 100 %, de manière à obtenir une électrode (1) constituée d'une âme (3) revêtue d'une couche externe (2).

Lors de ses recherches visant à mettre au point des électrodes (1) améliorées, la demanderesse a mis en évidence l'intérêt d'une phase homogène pour la couche externe (2) et éventuellement pour l'âme (3) ou du moins pour la partie de l'âme (3), de conductivité électrique élevée, devant assurer plus spécifiquement le transport de l'énergie électrique.

Par "phase homogène", il faut entendre non seulement l'absence de mélanges de plusieurs phases d'un même alliage (phases alpha, beta, gamma, etc... du diagramme des phases, ici de l'alliage binaire Cu-Zn), mais encore l'absence d'inclusions ou d'incrustations hétérogènes, typiquement ici des particules d'oxydes de zinc ou de cuivre.
A la base de l'invention, il y a non seulement la possibilité, mise en évidence fortuitement par la demanderesse, d'obtenir, à partir d'une couche (30) riche en Zn déposée sur une âme (20) contenant du Cu, une couche (31) monophasée constituée d'alliage Cu-Zn en phase beta prime (β′), mais encore la reconnaissance de l'intérêt d'une telle phase beta prime (β′) comme couche externe d'une électrode (1).
En effet, la demanderesse a observé qu'en particulier la dureté de cette phase beta prime (β′), de l'ordre de 100 HV (sous 20g), était favorable pour obtenir une électrode (1) performante, la phase alpha étant trop malléable et la phase gamma trop fragile.
En outre, cette phase beta prime (β′) est résistante à l'abrasion tout en étant cependant suffisamment malléable pour supporter sans dommage un tréfilage avec un rapport de tréfilage élevé.

De plus, la demanderesse a observé que, pour obtenir des électrodes (1) aux performances améliorées, il était nécessaire d'associer au traitement thermique spécifique de l'invention les deux autres moyens essentiels suivants :
- un décapage sélectif de la surface de cette couche (31) permettant d'éliminer les particules abrasives (particules d'oxydes principalement), ce qui a été trouvé favorable au tréfilage subséquent et surtout à la stabilité de l'étincelle et à la qualité des pièces usinées.
- un tréfilage du fil (11) avec un rapport de tréfilage élevé, ce qui présente à la fois des avantages économiques (les étapes a) et b) sont réalisés sur du fil de "gros" diamètre) et des avantages techniques (d'une part, écrouissage de l'âme (21) qui conduit à une âme finale (2) de caractéristiques mécaniques élevées, d'autre part, un renforcement de la cohésion entre l'âme (2) et sa couche externe (3), et enfin, un état de surface d'une grande homogénéité et régularité.

Le procédé selon l'invention peut être mis en oeuvre selon de nombreuses modalités sans s'écarter de ces trois moyens essentiels.

Le fil métallique de départ (20) est de préférence un fil de cuivre ou alliage de cuivre, de diamètre compris entre 0,1 et 3 mm et de préférence compris entre 0,3 et 2mm.

Typiquement, on choisit comme alliage de cuivre pour l'âme (20) un laiton contenant de 15 à 36 % en poids de Zn et de préférence à 20% de Zn (CuZn20).

Le cuivre ou ledit alliage de cuivre peuvent être dopés par un ou plusieurs des éléments choisis parmi Fe, Co, Ti, P, Mg, Cr, Zr, Si avec une teneur globale pondérale en ces éléments comprise entre 0,1 et 1 % et / ou par un ou plusieurs des éléments choisis parmi Al, Sn, Ni à une teneur globale pondérale pouvant atteindre 4%.

Cependant, il est possible selon l'invention de choisir pour fil métallique de départ (20) un fil "composite" constitué d'une partie centrale en métal ou alliage à hautes caractéristiques mécaniques (fer, acier, tungstène...) recouverte d'une couche de cuivre ou alliage de cuivre de conductivité électrique élevée, mais ce n'est pas là une modalité préférée de l'invention pour les raisons suivantes :
- d'une part, le tréfilage d'un fil à base de Cu-Zn exige moins de puissance que celui d'un fil plus "dur",
- d'autre part, il est essentiel que l'âme (2) soit un bon conducteur électrique.

De plus, le rapport de tréfilage est choisi selon l'invention pour que, après tréfilage, le fil soit légèrement en deçà de sa limite d'écrouissage de manière à obtenir un fil au diamètre final choisi, avec des caractéristiques mécaniques élevées (même avec un fil à base de Cu-Zn) et sans qu'il soit nécessaire de faire appel à un recuit intermédiaire.

Sur l'âme (20), "composite" ou non, on effectue un dépôt de zinc par tout moyen connu, qu'il s'agisse d'électrodéposition, de dépôt au trempé dans un bain de zinc fondu.
De préférence, on procède par électrodéposition.

On obtient ainsi un fil (10) ayant une couche (30) d'épaisseur comprise entre 5 et 150 micromètres.
L'épaisseur de la couche (30) augmente avec le diamètre du fil. Ainsi, pour un fil (10) de 1 mm de diamètre, elle est de préférence comprise entre 10 et 100 micromètres.
Par ailleurs, l'épaisseur de la couche varie avec la composition de l'âme (20). En particulier, l'épaisseur est inversement proportionnelle à la concentration de Zn dans l'âme (20).
Selon l'invention, on pourrait déposer, au lieu du zinc, un alliage riche en zinc, mais cela serait sans intérêt pratique.

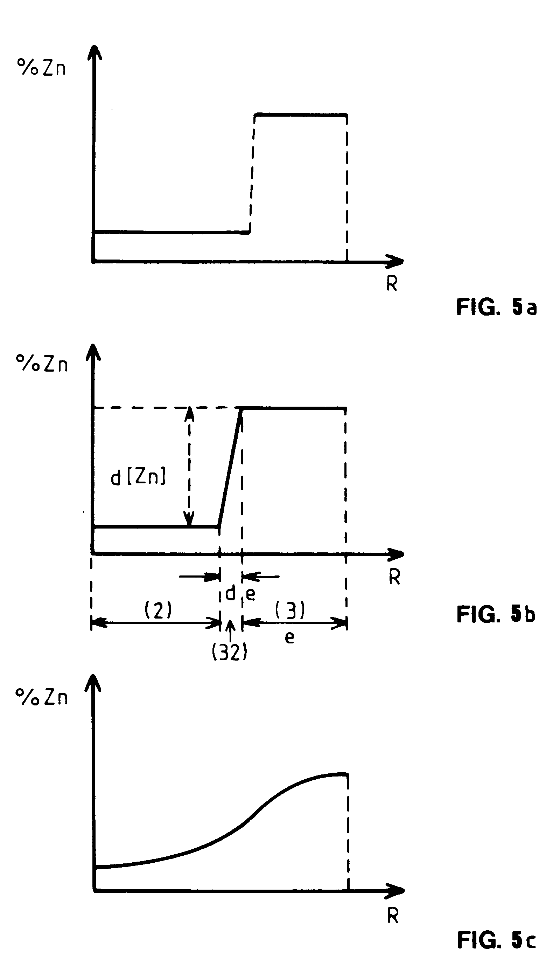

Le traitement thermique selon l'invention a lieu en atmosphère oxydante à une température inférieure à la température de transition beta prime-beta de l'alliage binaire Cu-Zn. Cette température de transition varie entre 456 et 468°C selon la composition de l'alliage.
Comme cela est connu par ailleurs, la transition beta prime-beta correspond à une transition entre un état ordonné (beta prime) des atomes de Cu et Zn, et un état désordonné (beta), ce dernier étant obtenu à une température supérieure au premier.
Mais la demanderesse a observé qu'en réalisant la diffusion des atomes de Zn et de Cu de préférence à une température inférieure à la température de transition beta-beta prime, on obtenait des résultats inattendus :
- d'une part, grâce à une durée de traitement thermique appropriée, il se forme une couche (31) en phase beta prime homogène sur toute son épaisseur ainsi qu'une âme (21) ayant la composition du fil (20) de départ,
- d'autre part, on observe à la jonction de la couche (31) et de l'âme (21), une zone de diffusion relativement étroite correspondant à un gradient de concentration en zinc élevé (voir figure 5b),
- enfin, les résultats à l'usinage après diffusion à cette température sont meilleurs que ceux obtenus à plus haute température, toutes choses que rien ne permettait de prévoir.

Cependant, des résultats encore acceptables, quoique légèrement inférieurs, peuvent être obtenus selon l'invention quand on dépasse légèrement la température de la transition beta prime-beta, la limite se situant vers 480 °C. Au-delà de cette température, il apparaît en particulier une trop grande augmentation de la porosité de la couche (31) qui s'avère néfaste pour l'électrode finale (1).

De préférence, de manière à pouvoir simultanément recristalliser l'âme (20) comprenant du cuivre et réaliser la diffusion réciproque des atomes de Cu de l'âme (20) et des atomes de Zn de la couche (30), on met en oeuvre le traitement thermique dans un four en atmosphère oxydante, à une température comprise entre 400 et 455°C.
Une fourchette de température préférée est 450° C +/- 5°C.
La durée du traitement thermique dépend de l'épaisseur de la couche (30) de Zn. Des essais préliminaires sont donc nécessaires pour déterminer la durée optimum du traitement thermique. En effet, si la durée est trop courte, on observe dans la couche (31) la présence de plusieurs phases, dont la phase gamma, plus riche en Zn que la phase beta prime. Si, par contre la durée est trop longue, on observe dans la couche (31) la présence de plusieurs phases, dont la phase alpha moins riche en Zn que la phase beta prime.

Typiquement, pour une épaisseur de couche (30) comprise entre 30 et 100 micromètres, la durée du traitement thermique est comprise entre 2 et 20 h, les durées les plus courtes étant associées aux épaisseurs de couche (30) les plus faibles.

Dans ces conditions, on obtient un fil (11) avec une âme (21) et une couche externe (31) totalement recristallisées. En particulier, il y a formation de très gros grains dans la couche (31), dont la taille est comprise entre 10 et 500 micromètres, ce qui facilite l'opération de transformation à froid (tréfilage) ultérieure.

En outre, dans le cas où l'âme du fil de départ contient des éléments d'addition tels que ceux déjà cités (Fe, Co, Ti, etc...), le traitement thermique selon l'invention peut contribuer avantageusement au durcissement structural de l'âme (20) de départ par précipitation des éléments d'addition, seuls ou en combinaison.

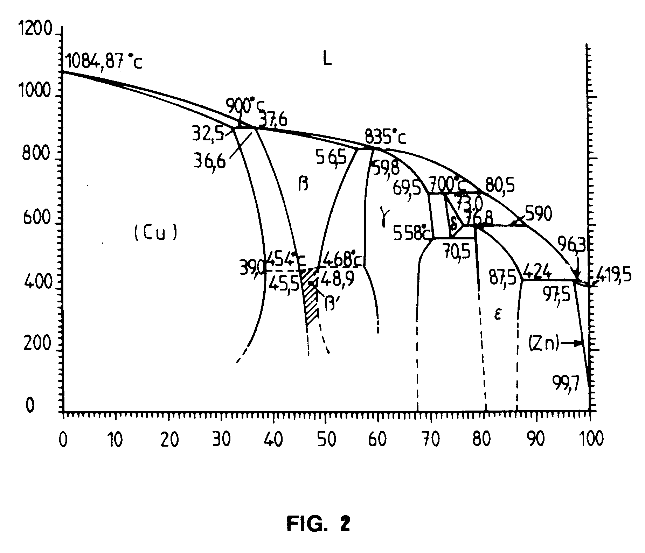

A la phase beta prime formée lors du traitement thermique correspond une composition qui, à la température de transition beta prime-beta est comprise entre 45,5 et 48,9 % en poids de Zn.
La durée du traitement thermique est choisie de manière à ce que, après refroidissement, la couche (31) du fil (11) conserve sa structure homogène en phase beta prime et pour cela, compte tenu de l'orientation des courbes qui limitent le domaine beta prime dans le diagramme des phase de Cu-Zn (voir figure 2, zone hachurée), la composition pondérale préférée de la phase beta prime est 46,5 % de Zn +/- 0,5%.

Selon l'invention, le traitement thermique est suivi d'un décapage sélectif qui permet d'enlever les particules d'oxydes formées à la surface de la couche (31).
De préférence, ce décapage est réalisé en continu et en ligne avec le tréfilage subséquent. Pour cela, on fait passer le fil (11) dans un bain acide.

Selon l'invention, on procède ensuite au tréfilage jusqu'au diamètre final, avec un rapport de tréfilage supérieur à 100 % et de préférence supérieur à 1000 %.
On obtient ainsi une électrode (1) sous forme de fil de diamètre compris entre 50 et 500 micromètres et de préférence compris entre 100 et 350 micromètres, dont la couche externe (3) a une épaisseur comprise entre 5 et 50 micromètres, et présentant une jonction (32) de faible épaisseur entre la couche externe (3) et l'âme (2).

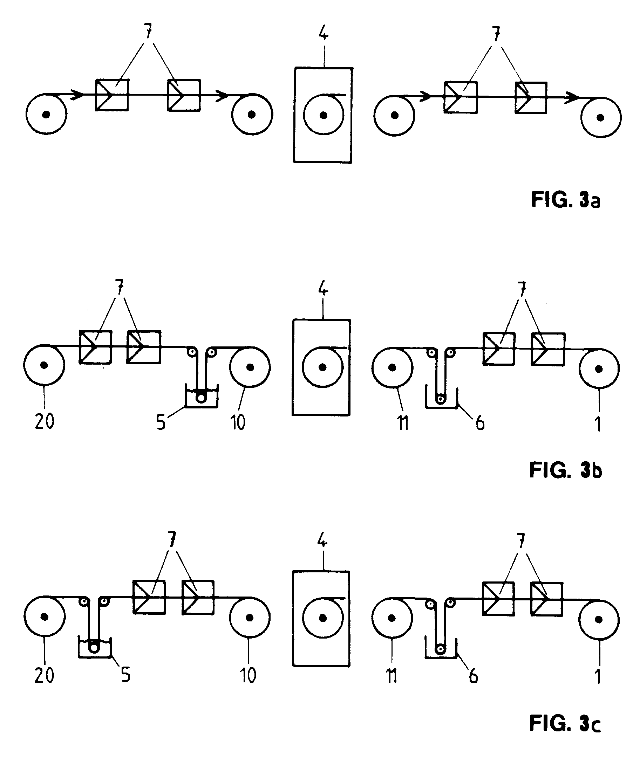

Le procédé selon l'invention s'intègre aisément et de manière économique à une ligne conventionnelle de tréfilage, comme schématisé aux figures 3a à 3c. Le dépôt de Zn peut être effectué en tête ou en queue de passe de tréfilage, comme illustré respectivement aux figures 3c et 3b. Par contre, il est préférable de réaliser l'opération de décapage sélectif en tête de la dernière passe de tréfilage notamment pour limiter l'usure des filières.
Dans le cas de la fabrication d'une électrode de très petit diamètre, nécessitant donc un grand nombre de passes de tréfilage, la gamme de fabrication est calculée de manière à ce qu'elle se termine par une séquence telle que schématisée aux figures 3b et 3c, comportant en dernière passe une forte réduction du diamètre.

Un autre objet de l'invention est une électrode (1) pour électroérosion sous forme de fil, comprenant une couche métallique externe (3) contenant du Zn entourant une âme métallique (2) comprenant du cuivre ou un alliage de cuivre, et caractérisée en ce que la couche métallique externe (3) et l'âme (2) sont à l'état écroui, en ce que la couche métallique externe (3) est constituée d'un alliage Cu-Zn en phase beta prime homogène et exempt l'inclusions d'oxydes et en ce que, entre la couche externe (3) et l'âme (2), la concentration en zinc varie de manière continue et brusque, sur une épaisseur "de" inférieure à celle de la couche métallique externe (3), de manière à former une jonction (32) entre la couche externe (3) et l'âme (2) ayant un gradient "d[Zn]/de" élevé.
"d[Zn]" exprime la différence de concentration en zinc dans la couche externe (3) et dans l'âme (2) et "de" exprime l'épaisseur de la jonction (32)- voir figure 5b.
Selon l'invention, on peut caractériser de différentes manières la jonction (32) selon l'invention :
- d'une part par le gradient de concentration en zinc à la jonction (32) (d[Zn]/de). Ce gradient est compris selon l'invention entre 5 et 50 % de Zn en poids/micromètre, et de préférence compris entre 5 et 30 % de Zn en poids/micromètre,
- d'autre part, par le rapport "e/de" de l'épaisseur "e" de la couche externe (3) et de l'épaisseur "de" de la jonction (32).

Ce rapport est selon l'invention supérieur à 5 et de préférence compris entre 10 et 20.
Bien que variant dans le même sens, ces deux critères ne sont pas de même nature. Il suffit cependant qu'un seul de ces deux critères (gradient d[Zn]/de ou rapport e/de) soit satisfait pour obtenir la Jonction selon l'invention. De préférence, les deux conditions "d[Zn]/de compris entre 5 et 50 % de Zn/micromètre" et "e/de supérieur à 5" sont remplies simultanément.

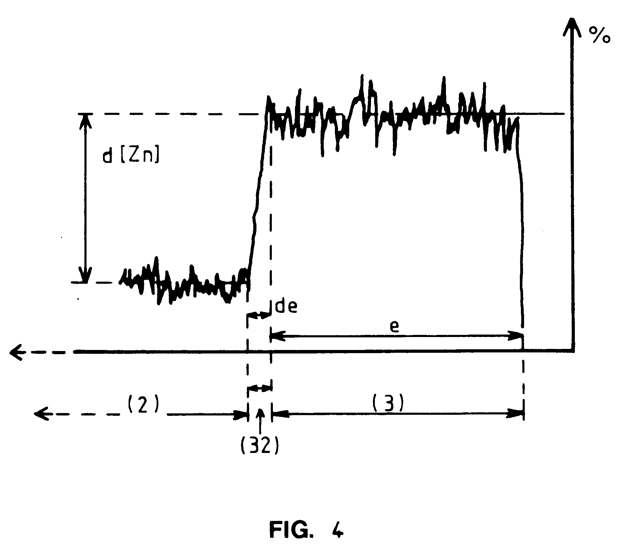

Les figures 4 et 5b illustrent de manière réelle dans un cas (figure 4) et schématique dans l'autre (figure 5b) ces critères selon l'invention.

L'âme métallique (2) est de préférence un fil de cuivre ou alliage de cuivre.
Comme alliage de cuivre, on choisit typiquement un laiton contenant de 15 à 36 % en poids de Zn et de préférence un laiton à 20 % de Zn (CuZn20).
Le cuivre ou ledit alliage de cuivre de l'âme (2) peut contenir un ou plusieurs des éléments choisis, de manière à durcir le fil, parmi Fe, Co, Ti, P, Mg, Cr, Zr et Si, avec une teneur globale pondérale en ces éléments comprise entre 0,1 et 1 %, et / ou un ou plusieurs des éléments choisis parmi Al, Sn Ni à une teneur globale pondérale pouvant atteindre 4%.

Selon une modalité possible de l'invention, mais non préférée, l'âme (2) comprenant elle-même une âme centrale en métal ou alliages à hautes caractéristiques mécaniques (fer, acier, tungstène) recouverte d'une couche de cuivre ou un alliage de cuivre.

La couche métallique externe (3) selon l'invention présente une concentration en Zn et en Cu sensiblement constante sur toute son épaisseur (concentration en Zn voisine de 46,5 % +/-1). Cette épaisseur est généralement comprise entre 5 et 50 micromètres.

Pour un diamètre de fil (1) variant selon l'invention de 50 à 500 micromètres, l'épaisseur de la couche (3) varie de 5 à 50 micromètres et celle de la jonction (32) varie de 0,5 à 10 micromètres. De préférence, l'épaisseur de la jonction (32) varie de 1 à 5 micromètres pour un fil (1) de diamètre compris entre 100 et 350 micromètres.

L'âme métallique (2) présente un diamètre pouvant aller de 40 à 450 micromètres. Au moins la partie externe de l'âme (2) est en cuivre ou en alliage de cuivre, de composition sensiblement constante. On peut choisir comme alliage un laiton à teneur en Zn comprise entre 15 et 36 % en poids de Zn. L'écart de concentration en zinc (d[Zn]) à la jonction (32) est donc d'au moins 10 % (avec 46% de Zn dans la couche externe (3) et avec 36 % de Zn dans l'âme (2) ou la partie de l'âme (2) en contact avec la couche externe (3)).

Il est particulièrement avantageux d'avoir une jonction (32) selon l'invention avec, soit un gradient de concentration en zinc (d[Zn]/de) compris selon l'invention entre 5 et 50 % pondéral de Zn par micromètre, ou soit un rapport e/de compris entre 5 et 30.
En effet, d'une part, il est avantageux que ce gradient (ou ce rapport) soit élevé afin que chaque partie du fil puisse ainsi assurer de manière optimum ses fonctions propres (tenue mécanique et conduction électrique pour l'âme (2), tenue à l'usure, dissipation de la chaleur et stabilité des décharges électriques pour la couche externe (3).
Mais, d'autre part, il importe aussi que ce gradient (ou ce rapport) ait une valeur limitée afin qu'il y ait une interpénétration de l'âme (2) et de la couche externe (3) formant la jonction (32), suffisante pour assurer une cohésion très forte de l'âme (2) et de la couche externe (3).

### EXEMPLE :

Comme fil métallique de départ, on a choisi un fil de laiton en CuZn20 en bobine, en sortie de passe de tréfilage avec un diamètre de 0,85 mm et dans un état demi-dur.
On l'a revêtu d'une couche homogène de Zn de 30 micromètres d'épaisseur par électrodéposition, en disposant l'équipement de revêtement du zinc en bout de ligne de tréfilage, comme schématisé à la figure 3b. On a ainsi obtenu un fil (10) de 0,91 mm de diamètre.

Puis, on a traité thermiquement la bobine de fil (10) dans un four en atmosphère air, à la température de 450°C +/-5°C, pendant 6 heures (durée déterminée à la suite d'essais préliminaires). On a ainsi obtenu une bobine de fil (11) avec une une (21) de 0,76 mm de diamètre et une couche (31) de 0,075 mm d'épaisseur. La jonction entre la couche (31) et l'âme (21) a un épaisseur de 6 micromètres.

Après avoir placé en tête de ligne de tréfilage un bain acide de décapage sélectif des oxydes, on a procédé au décapage et tréfilage en ligne de la bobine de fil (11) et on a ainsi obtenu une électrode pour électroérosion (1) de 0,25 mm de diamètre (rapport de tréfilage de 1325%) constituée d'une âme centrale (2) de 0,21 mm de diamètre, d'une couche (3) de 20 micromètres d'épaisseur et d'une jonction (32) de 1,7 micromètre d'épaisseur.

Caractéristiques de ce fil :

| | |
|---|---|
| Conductivité électrique | 29 % IACS |
| Charge à la rupture (Rm) | 910 MPa |
| Allongement à la rupture | 1,5 % |
| Dureté de la couche externe (3) | 100 HV (sous 20 g à l'état recuit) |
| Dureté de l'âme (2) | 75 HV (sous 20 g à l'état recuit) |

Sur des coupes du fil (1) obtenu, on a fait des analyses spectrographiques (rayons X) et des examens au microscope optique et électronique qui ont montré que :
- la couche (3) est constituée d'une phase beta prime de Cu-Zn à 46,5 % de Zn,
- la couche (3) est homogène sur toute son épaisseur et est dépourvue d'inclusions d'oxydes.
- le gradient d[Zn]/de vaut 15% de Zn en poids/micromètre et le rapport e/de vaut 12.

On a testé le fil obtenu selon l'invention sur machine d'électroérosion, comparativement à des fils du commerce, et on a observé une supériorité du fil selon l'invention en particulier en ce qui concerne la stabilité des décharges électriques, qui conduit à une excellente qualité de surface de la pièce usinée.

### AVANTAGES DE L'INVENTION

L'invention permet de concilier à la fois la performance technique et la performance économique.
En effet, en ce qui concerne la performance technique, l'invention a montré l'intérêt d'avoir une couche externe constituée d'une phase beta prime homogène d'alliage Cu-Zn, et exempte d'inclusions et d'incrustations hétérogènes, solution techniquement supérieure à celles qui consistent à avoir soit une couche de Zn, qui présente l'inconvénient de fondre à basse température (419°C), soit des couches d'alliages Cu-Zn polyphasés.

L'invention a montré aussi l'intérêt d'avoir, à la jonction (32) entre l'âme (2) et la couche (3), une variation très brusque mais cependant continue de la composition chimique (figure 5b).

Notamment par cette dernière caractéristique, importante, l'invention se distingue des situations de l'art antérieur :
- soit discontinuité de la composition chimique, dans le cas d'un simple dépôt de zinc à la surface d'une âme, comme schématisé à la figure 5a,
- soit variation continue de la concentration en Zn sur une grande épaisseur et virtuellement sur la totalité du fil (1), comme schématisé à la figure 5c.

En ce qui concerne l'aspect économique, il est essentiel d'observer que le procédé selon l'invention fait appel à peu d'investissements spécifiques (seulement le dispositif (5) de dépôt de la couche de zinc et le dispositif (6) de décapage) et s'intègre parfaitement à une fabrication classique de fil, comme cela est illustré aux figures 3a à 3c.
Comme la fabrication classique d'un fil nécessite généralement un recuit intermédiaire et comme le procédé selon l'invention utilise ce même recuit pour obtenir la phase beta prime homogène, les coûts d'exploitation du procédé selon l'invention (coût des matières des matières mis à part - le zinc...etc) sont sensiblement les mêmes que ceux d'un tréfilage ordinaire.

### DESCRIPTION DES FIGURES

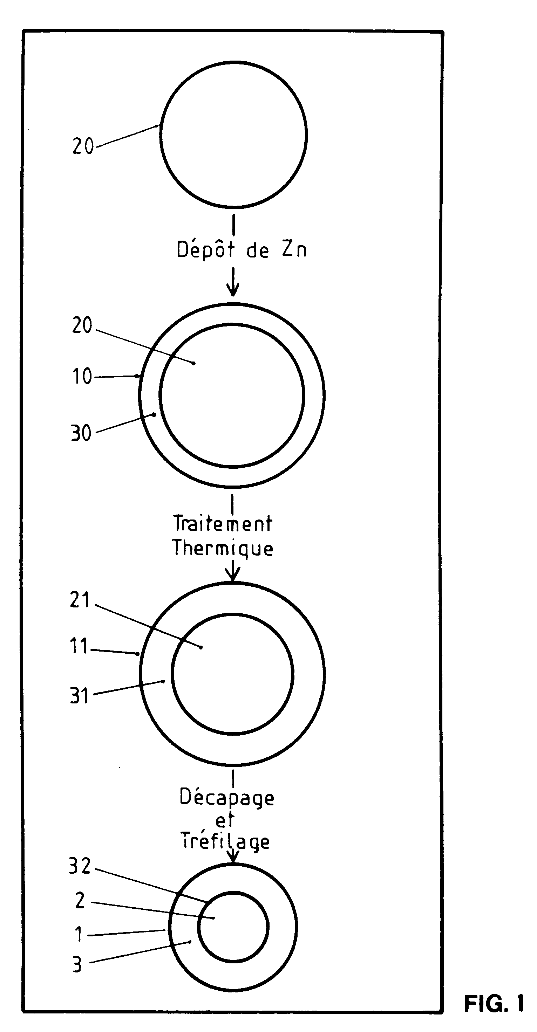

La figure 1 schématise les différentes étapes du procédé selon l'invention, avec une vue en coupe des fils aux différents stades du procédé :
- on dépose sur un fil (20) une couche de Zn et on obtient ainsi un fil (10) doté d'une âme (20) et d'une couche externe (30),
- on traite thermiquement ce fil (10) dans un four et on obtient un fil (11) doté d'une âme (21) et d'une couche externe (31),
- on décape et on tréfile ce fil (11) pour obtenir le fil (1) selon l'invention, doté d'une âme (2) et d'une couche externe (3).

La figure 2 est le diagramme des phases du système Cu-Zn (tiré de "Binary Alloy Phase Diagram" publié par l'American Society for Metals - 1986). En abscisse figure le pourcentage en poids de Zn et en ordonnée la température. Le domaine de la phase beta prime a été hachuré.

La figure 3a représente schématiquement une ligne de tréfilage classique où l'on a représenté symboliquement quelques filières (7) et un four de recuit intermédiaire (4).

La figure 3b représente schématiquement l'adaptation d'une ligne de tréfilage classique à la fabrication d'un fil (1) pour électroérosion, avec l'implantation d'un dispositif de dépôt de Zn (5) en fin de passe de tréfilage et d'un dispositif de décapage (6) en tête de passe de tréfilage.

La figure 3c est analogue à la figure 3b sauf en ce que le dispositif de dépôt de zinc est implanté en tête de l'avant dernière passe de tréfilage.

La figure 4 est un enregistrement de la teneur en Zn (en ordonnée) selon la direction radiale (en abscisse) du fil (1) de l'exemple. Elle montre que cette teneur est sensiblement constante (il convient bien sûr de ne pas tenir compte du bruit de fond du signal) dans la couche externe (3) et diminue brusquement à la jonction entre la couche externe (3) et l'âme (2) du fil (1) (d[Zn] = 26,5%, de = 1,7 micromètre, e = 20 micromètres).

Les figures 5a à 5c représentent des diagrammes illustrant la variation de la concentration en zinc (en ordonnée) en fonction du rayon R dans trois cas de figure :
- figure 5a (illustre l'art antérieur) : cas d'un dépôt de zinc à la surface d'une âme en cuivre sans traitement thermique.
- figure 5b : elle illustre l'invention. La jonction (32) entre l'âme (2) et la couche (3), qui a une épaisseur égale à de, est constituée par la partie à composition variable.
- figure 5c (illustre l'art antérieur) : cas d'un dépôt de zinc à la surface d'une âme en cuivre avec traitement thermique selon l'art antérieur.

## Revendications

1. Procédé de fabrication d'une électrode pour électroérosion comprenant la formation d'une couche métallique externe de zinc sur un fil métallique comprenant du cuivre, un traitement thermique suivi d'une diminution de la section du fil métallique, et caractérisée en ce que,
a) on forme une couche (30) Zn sur un fil métallique (20) comprenant du cuivre, de diamètre supérieur au diamètre de l'électrode (1) à obtenir, de manière à former un fil (10),
b) après tréfilage éventuel du fil (10), on soumet le fil (10) à un traitement thermique de diffusion en atmosphère oxydante à une température inférieure à la température de transition beta prime (β') - beta (β) de l'alliage binaire Cu-Zn et pendant la durée nécessaire à la transformation de la couche (30) riche en zinc en une couche (31) de Cu-Zn en phase beta prime (β'), et comprise entre 400°C et 455°C, de manière à former un fil (11) constitué d'une âme (21) et d'une couche (31),
c) on procède ensuite à un décapage sélectif du fil (11), de manière à éliminer les particules d'oxydes présentes à la surface de la couche (31) et,
d) on procède enfin au tréfilage du fil (11) ainsi décapé jusqu'au diamètre final, avec un rapport de tréfilage supérieur à 100 %, de manière à obtenir une électrode (1) constituée d'une âme (3) revêtue d'une couche externe (2).

2. Procédé selon la revendication 1 dans lequel le fil métallique (20) est en cuivre ou en alliage de cuivre.

3. Procédé selon la revendication 2 dans lequel ledit alliage de cuivre est un laiton contenant de 15 à 36 % en poids de Zn.

4. Procédé selon la revendication 3 dans lequel on choisit de préférence un laiton à 20 % +/- 2% en poids de Zn.

5. Procédé selon l'une quelconque des revendications 2 à 4 dans lequel le fil métallique (20) est en cuivre ou en alliage de cuivre dopé par un ou plusieurs des éléments choisis parmi Fe, Co, Ti, P, Mg, Cr, Zr, Si, à une teneur globale pondérale comprise entre 0,1 et 1%.

6. Procédé selon une quelconque des revendications 2 et 5 dans lequel le fil métallique (20) est en cuivre ou en alliage de cuivre dopé par un ou plusieurs des éléments choisis parmi Al, Sn, Ni à une teneur pondérale globale pouvant atteindre 4 %.

7. Procédé selon une quelconque des revendications 1 à 6 dans lequel ledit traitement thermique est réalisé de préférence à 450°C +/ - 5°C.

8. Procédé selon une quelconque des revendications 1 à 7 dans lequel, après ledit traitement thermique et avant la dernière passe de tréfilage, on réalise un décapage sélectif du fil (11) en milieu acide.

9. Procédé selon une quelconque des revendications 1 à 8 dans lequel ledit rapport de tréfilage de la dernière passe de tréfilage est de préférence supérieur à 1000%.

10. Electrode (1) pour électroérosion sous forme de fil, comprenant une coucha métallique externe (3) contenant du Zn entourent une âme métallique (2) comprenant du cuivre ou un alliage de cuivre, et caractérisée en ce que la couche métallique externe (3) et l'âme (2) sont à l'état écroui, en ce que la couche métallique externe (3) est constituée d'un alliage Cu-Zn en phase beta prime homogène et est exempte d'inclusions d'oxydes et en ce que, entre la couche externe (3) et l'âme (2), la concentration en zinc varie de manière continue et brusque, sur une épaisseur "de" inférieure à celle "e" de la couche externe (3), de manière à former une jonction (32) ayant un gradient "d[Zn]/de" compris entre 5 et 50% de Zn en poids/micromètre.

11. Electrode selon la revendication 10 dans laquelle la dite couche métallique externe (3) présente une concentration pondérale en Zn voisine de 46,5 % +/- 1 , sensiblement constante sur toute son épaisseur.

12. Electrode selon une quelconque des revendications 10 à 11 dans laquelle le gradient d[Zn]/de est de préférence compris entre 5 et 30 % de Zn en poids/micromètre.

13. Electrode selon une quelconque des revendications 10 à 11 dans laquelle le rapport e/de est supérieur à 5 et de préférence compris entre 10 et 20.

14. Electrode selon une quelconque des revendications 10 à 13 dans laquelle le jonction (32) a une épaisseur comprise entre 0,5 et 10 micromètres et de préférence comprise entre 1 et 5 micromètres.

15. Electrode selon une quelconque des revendications 10 à 14 dans laquelle l'âme métallique (2) est en cuivre ou en alliage de cuivre.

16. Electrode selon la revendication 15 dans laquelle ledit alliage de cuivre est un laiton contenant de 15 à 36 % de Zn.

17. Electrode selon la revendication 16 dans laquelle ledit laiton est de préférence un laiton à 20 % +/- 2% en poids de Zn.

18. Electrode selon une quelconque des revendications 15 à 17 dans laquelle l'âme métallique (2) est en cuivre ou en alliage de cuivre dopé par un ou plusieurs des éléments choisis parmi Fe, Co, Ti, P, Mg, Cr, Zr, Si, à une teneur globale pondérale comprise entre 0,1 et 1%.

19. Electrode selon une quelconque des revendications 15 à 18 dans laquelle l'âme métallique (2) est en cuivre ou en alliage de cuivre dopé par un ou plusieurs des éléments choisis parmi Al, Sn, Ni à une teneur pondérale globale pouvant atteindre 4 %.

20. Electrode selon une quelconque des revendications 10 à 18 dans laquelle l'électrode (1) a un diamètre compris entre 50 et 500 micromètres, et dans laquelle ladite couche externe (3) a une épaisseur comprise entre 5 et 50 micromètres.

## Claims

1. Process for manufacture of an electrode for electro-discharge machining comprising the formation of an external metallic coating of zinc on a metal wire comprising copper, and thermal processing followed by reduction of the section of the metal wire, characterised in that
a) a coating (30) of Zn is formed on a metal wire (20) comprising copper, having a diameter greater than the diameter of the electrode (1) to be obtained, such as to form a wire (10),
b) after drawing, where applicable, of the wire (10), the wire (10) is subjected to thermal diffusion processing in an oxidizing atmosphere at a temperature less than the transition temperature beta prime (β') - beta (β) of the binary alloy Cu-Zn and for the duration necessary for the transformation of the zinc-rich coating (30) into a coating (31) of Cu-Zn in the beta prime (β') phase, and between 400°C and 455°C, such as to form a wire (11) composed of a core (21) and a coating (31),
c) selective etching of the wire (11) then takes place, such as to remove the particles of oxides present on the surface of the coating (31) and,
d) the wire (11) etched in this manner is then drawn until it reaches its final diameter, the proportion of drawing being greater than 100%, such as to obtain an electrode (1) composed of a core (3) covered with an external coating (2).

2. Process according to claim 1 wherein the metal wire (20) is made from copper or copper alloy.

3. Process according to claim 2 wherein said copper alloy is a brass containing 15 to 36% by weight of Zn.

4. Process according to claim 3 wherein a brass with 20% +/- 2% by weight of Zn is preferably selected.

5. Process according to any one of claims 2 to 4 wherein the metal wire (20) is made from copper or copper alloy doped with one or more elements selected from Fe, Co, Ti, P, Mg, Cr, Zr, Si, at a global content by weight of between 0.1 and 1%.

6. Process according to any one of claims 2 and 5 wherein the metal wire (20) is made from copper or copper alloy doped with one or more elements selected from Al, Sn, Ni, at a global content by weight which may reach 4%.

7. Process according to any one of claims 1 to 6 wherein said thermal processing is preferably carried out at 450°C +/- 5°C.

8. Process according to any one of claims 1 to 7 wherein after said thermal processing and before the final drawing pass, selective etching of the wire (11) in an acid medium takes place.

9. Process according to any one of claims 1 to 8 wherein said proportion of drawing in the final drawing pass is preferably greater than 1000%.

10. Electrode (1) for electro-discharge machining in the form of a wire, comprising an external metallic coating (3) containing Zn surrounding a metal core (2) comprising copper or a copper alloy, and characterised in that the external metallic coating (3) and the core (2) are cold-hardened, in that the external metallic coating (3) is composed of a Cu-Zn alloy in the homogeneous beta prime phase and has no oxide inclusions and in that between the external coating (3) and the core (2) the concentration of zinc varies in a continuous and abrupt manner over a thickness "de" less than that "e" of the external coating (3) such as to form a junction (32) having a gradient "d[Zn]/de" of between 5 and 50% of Zn by weight/micrometre.

11. Electrode according to claim 10 wherein said external metallic coating (3) has a concentration by weight of Zn of approximately 46.5% +/- 1, substantially constant throughout its entire thickness.

12. Electrode according to any one of claims 10 to 11 wherein the gradient d[Zn]/de is preferably between 5 and 30% of Zn by weight/micrometre.

13. Electrode according to any one of claims 10 to 11 in which the ratio e/de is greater than 5 and preferably between 10 and 20.

14. Electrode according to any one of claims 10 to 13 wherein the junction (32) has a thickness of between 0.5 and 10 micrometres and preferably between 1 and 5 micrometres.

15. Electrode according to any one of claims 10 to 14 wherein the metal core (2) is made from copper or copper alloy.

16. Electrode according to claim 15 wherein said copper alloy is a brass containing 15 to 36% Zn.

17. Electrode according to claim 16 wherein said brass is preferably a brass with 20% +/- 2% by weight of Zn.

18. Electrode according to any one of claims 15 to 17 in which the metal core (2) is made from copper or copper alloy doped with one or more elements selected from Fe, Co, Ti, P, Mg, Cr, Zr, Si, at a global content by weight of between 0.1 and 1%.

19. Electrode according to any one of claims 15 to 18 wherein the metal core (2) is made from copper or copper alloy doped with one or more elements selected from Al, Sn, Ni, at a global content by weight which may reach 4%.

20. Electrode according to any one of claims 10 to 18 wherein the electrode (1) has a diameter of between 50 and 500 micrometres, and wherein said external coating (3) has a thickness of between 5 and 50 micrometres.

## Patentansprüche

1. Verfahren zur Herstellung einer Elektrode zur Funkenerosionsbearbeitung, das die Bildung einer äußeren metallischen Zinkschicht auf einem Kupfer aufweisenden Metalldraht und eine Wärmebehandlung mit einer nachfolgenden Verringerung des Querschnitts des Metalldrahtes umfaßt und dadurch gekennzeichnet ist, daß
a) man eine Zn-Schicht (30) auf einem Kupfer aufweisenden Metalldraht (20) größeren Durchmessers als des Durchmessers der zu erhaltenden Elektrode (1) zwecks Bildung eines Drahtes (10) bildet,
b) man nach eventuellem Ziehen des Drahtes (10) den Draht (10) einer Diffusionswärmebehandlung in oxidierender Atmosphäre bei einer Temperatur unter der Temperatur der Beta-Strich (β') - Beta (β) - Umwandlung der binären Cu-Zn-Legierung und während der zur Umwandlung der an Zink reichen Schicht (30) in eine Cu-Zn-Schicht (31) in Beta-Strich (β') - Phase erforderlichen Dauer im Bereich von 400 °C bis 455 °C derart unterwirft, um einen aus einem Kern (21) und einer Schicht (31) bestehenden Draht (11) zu bilden,
c) man anschließend ein selektives Beizen des Drahtes (11) derart vornimmt, um die an der Oberfläche der Schicht (31) vorhandenen Teilchen von Oxiden zu beseitigen, und
d) man schließlich ein Ziehen des so gebeizten Drahtes (11) bis zum Enddurchmesser mit einem Ziehverhältnis über 100 % derart vornimmt, um eine aus einem mit einer äußeren Schicht (2) überzogenen Kern (3) bestehende Elektrode (1) zu erhalten.

2. Verfahren nach dem Anspruch 1, bei dem der Metalldraht (20) aus Kupfer oder Kupferlegierung ist.

3. Verfahren nach dem Anspruch 2, bei dem die Kupferlegierung ein 15 bis 36 Gew.-% Zn enthaltendes Messing ist.

4. Verfahren nach dem Anspruch 3, bei dem man vorzugsweise ein Messing mit 20 +/- 2 Gew.-% Zn wählt.

5. Verfahren nach irgendeinem der Ansprüche 2 bis 4, bei dem der Metalldraht (20) aus Kupfer oder Kupferlegierung ist, die mit einem oder mehreren der unter Fe, Co, Ti, P, Mg, Cr, Zr, Si gewählten Elemente mit einem Gesamtgewichtsgehalt im Bereich von 0,1 bis 1 % dotiert ist.

6. Verfahren nach irgendeinem der Ansprüche 2 und 5, bei dem der Metalldraht (20) aus Kupfer oder Kupferlegierung ist, die mit einem oder mehreren der unter Al, Sn, Ni gewählten Elemente mit einem Gesamtgewichtsgehalt dotiert ist, der 4 % erreichen kann.

7. Verfahren nach irgendeinem der Ansprüche 1 bis 6, bei dem die Wärmebehandlung vorzugsweise bei 450 +/- 5 °C durchgeführt wird.

8. Verfahren nach irgendeinem der Ansprüche 1 bis 7, bei dem man nach der Wärmebehandlung und vor dem letzten Ziehdurchgang ein selektives Beizen des Drahtes (11) in saurem Medium durchführt.

9. Verfahren nach irgendeinem der Ansprüche 1 bis 8, bei dem das Ziehverhältnis des letzten Stichdurchgangs vorzugsweise über 1000 % ist.

10. Elektrode (1) zur Funkenerosionsbearbeitung in Drahtform, die eine äußere, Zn enthaltende Metallschicht (3) aufweist, die einen metallischen Kern (2) aus Kupfer oder einer Kupferlegierung umgibt,
dadurch gekennzeichnet, daß
die äußere Metallschicht (3) und der Kern (2) im verformten Zustand sind, daß die äußere Metallschicht (3) aus einer Cu-Zn-Legierung im homogenen Beta-Strich-Phasenbereich und frei von Einschlüssen von Oxiden ist, und daß zwischen der äußeren Schicht (3) und dem Kern (2) die Konzentration an Zink derart kontinuierlich und schroff über eine Dicke "de" unter derjenigen "e" der Außenschicht (3) derart variiert, um einen Verbindungsbereich (32) mit einem Gradienten "d[Zn)/de" im Bereich von 5 bis 50 Gew.-% Zn/µm zu bilden.

11. Elektrode nach dem Anspruch 10, wobei die äußere Metallschicht (3) eine Gewichtskonzentration an Zink nahe 46,5 +/- 1 % aufweist, die über ihre gesamte Dicke im wesentlichen konstant ist.

12. Elektrode nach irgendeinem der Ansprüche 10 bis 11, wobei der Gradient d[Zn]/de vorzugsweise im Bereich von 5 bis 30 Gew.-% Zn/µm ist.

13. Elektrode nach irgendeinem der Ansprüche 10 bis 11, wobei das Verhältnis e/de über 5 und vorzugsweise im Bereich von 10 bis 20 ist.

14. Elektrode nach irgendeinem der Ansprüche 10 bis 13, wobei der Verbindungsbereich (32) eine Dicke im Bereich von 0,5 bis 10 µm und vorzugsweise im Bereich von 1 bis 5 µm hat.

15. Elektrode nach irgendeinem der Ansprüche 10 bis 14, wobei der metallische Kern (2) aus Kupfer oder aus Kupferlegierung ist.

16. Elektrode nach dem Anspruch 15, wobei die Kupferlegierung ein Messing ist, das 15 bis 36 % Zn enthält.

17. Elektrode nach dem Anspruch 16, wobei das Messing vorzugsweise ein Messing mit 20 +/- 2 Gew.-% Zn ist.

18. Elektrode nach irgendeinem der Ansprüche 15 bis 17, wobei der metallische Kern (2) aus Kupfer oder aus Kupferlegierung ist, die mit einem oder mehreren der unter Fe, Co, Ti, P, Mg, Cr, Zr, Si gewählten Elemente mit einem Gesamtgewichtsgehalt im Bereich von 0,1 bis 1 % dotiert ist.

19. Elektrode nach irgendeinem der Ansprüche 15 bis 18, wobei der metallische Kern (2) aus Kupfer oder einer Kupferlegierung ist, die mit einem oder mehreren der unter Al, Sn, Ni gewählten Elemente mit einem Gesamtgewichtsgehalt dotiert ist, der 4 % erreichen kann.

20. Elektrode nach irgendeinem der Ansprüche 10 bis 18, wobei die Elektrode (1) einen Durchmesser im Bereich von 50 bis 500 µm aufweist und die äußere Schicht (3) neine Dicke im Bereich von 5 bis 50 µm aufweist.
